# EUROPEAN PATENT APPLICATION

(11) **EP 4 844 608 A1**
(43) Date of publication of application: **25.11.2026**
(21) Application number: 26180491.8
(22) Date of filing: 22.05.2026
(51) Int. Cl.: G06F 16/951

(54) **EFFICIENT LARGE-SCALE WEB CRAWLING THROUGH REINFORCEMENT LEARNING**

(30) Priority: 22.05.2025 US 202519216604
(71) Applicant: Strider Technologies, Inc., South Jordan, UT 84095 (US)
(72) Inventor: Daniel, Keil, Virginia (US); Michael, DeAngelo, Utah (US)
(74) Representative: Eisenführ Speiser

(57) **Abstract**

Methods and systems are disclosed herein to leverage machine learning techniques to improve the efficiency of web crawling and, in particular, web crawling with the goal of finding "valuable" (i.e., however that term may be defined for a given use case) documents on websites. For example, by starting with one or more "undirected" crawls of websites, identifying the valuable documents gathered across those crawled websites, and then training an artificial intelligence (AI)-based model to "prefer" or prioritize the crawled paths that led to the discovery of the documents that met the "valuable" criteria for the given use case, the number of web page requests needed to get valuable data from any website(s) that contains similar data can effectively be minimized.

## Description

### BACKGROUND

"Web crawling," also known as "website spidering" or "scraping," is an automated process, wherein a software agent, e.g., a "spider" or "crawler," is configured to systematically navigate the web, download content from various websites, and/or extract pertinent information. This process of web crawling may be used, e.g., by search engines, to index and build a search engine database, thereby allowing the search engine to provide relevant results to user queries.

In some implementations, spiders may start with a list of known URLs, visit those pages, and then follow the links on those pages to discover new URLs, and repeat the process recursively, e.g., until some end condition is met (e.g., all links crawled, page limit met, bandwidth limit met, site stops responding, etc.), thereby effectively "crawling" through the web in a systematic fashion.

The extracted data, including text, images, and other information, may then be used to build an index of a website's content, which index can be used to help search engines understand what a website is about and/or what content is available on each page. There are various types of crawlers, including general-purpose crawlers (e.g., for search engines), focused crawlers targeting specific topics, and scraping crawlers for data extraction.

However, with prior art crawlers, all of the links on a given website page are typically treated equally (i.e., are considered to be of equal importance). This may lead to sub-optimal web crawling results, e.g., if any end condition other than "all links crawled" is met. For example, if an end condition such as "page limit met" or "bandwidth limit met" turns out to be the end condition that causes the crawler to stop operations, the crawler could easily end up crawling less useful pages instead of the pages that the entity putting the crawler into use is actually more interested in. Such undirected web crawling operations at large scale may also consume significant computational and network resources. For instance, each web page request generally involves at least one HTTP request-response cycle over a network, consuming network bandwidth, CPU cycles for request processing and response parsing, and memory for storing intermediate results. When a crawler follows links that do not lead to documents of interest, these network and computational resources are wasted. At very large scales, e.g., tens of thousands of websites, the cumulative waste of network bandwidth, server load imposed on the crawled websites, and computational resources on the crawling system can be substantial. There is thus a need for techniques that reduce the number of network requests required to discover documents of interest, thereby improving the utilization of network bandwidth, reducing CPU and memory consumption on the crawling system, and reducing the load imposed on crawled web servers.

Accordingly, improved techniques for improved and intelligent web crawling are desirable, especially techniques that reduce the consumption of network bandwidth, computational resources, and time required to discover documents of interest.

### SUMMARY

Methods and systems are disclosed herein to leverage machine learning techniques to improve the efficiency of web crawling and, in particular, web crawling with the goal of finding "valuable" (i.e., however that term may be defined for a given use case) documents on websites. For example, by starting with one or more "undirected" crawls of websites, identifying the valuable documents gathered across those crawled websites, and then training an artificial intelligence (AI)-based model to "prefer" or "prioritize" the crawled paths that led to the discovery of the documents that met the "valuable" criteria for the given use case, the number of web page requests needed to get valuable data from any website that contains similar data can effectively be minimized.

The techniques disclosed herein could also be employed in a software product that is distributed to customers, e.g., by training AI models to find the best path to any type of data that a given customer may want to find on the Internet, and then selling the data collection operations as a service to end user customers.

In an aspect of the present invention, a computer-implemented method is presented, comprising: obtaining an initial website for web crawling operations, obtaining one or more valuable document criteria for the web crawling operations, performing one or more web crawls from the initial website, wherein each web crawl comprises a crawl path, identifying one or more valuable documents discovered from the one or more web crawls based, at least in part, on the one or more valuable document criteria, training an artificial intelligence (AI) model to learn the crawl paths that led to the identification of the one or more valuable documents, and storing the trained AI model in a memory.

In an embodiment, the initial website is specified via a starting Uniform Resource Locator (URL).

In an embodiment, the one or more valuable document criteria comprise one or more of: a document category; a document type; a subject matter; or a document language.

In an embodiment, the one or more web crawls from the initial website comprise undirected web crawls.

In an embodiment, the method further comprises: providing the trained AI model to an entity.

In an embodiment, the trained AI model is configured for use in an intelligent web crawling operation, wherein the intelligent web crawling operation is based, at least in part, on the one or more valuable document criteria.

In an embodiment, the method further comprises: performing one or more additional web crawls from a second initial website, wherein each additional web crawl comprises a crawl path, identifying one or more additional valuable documents discovered from the one or more additional web crawls based, at least in part, on the one or more valuable document criteria, re-training the AI model to further learn the crawl paths that led to the identification of the one or more additional valuable documents, and storing the re-trained AI model in the memory.

In an embodiment, the crawl paths for the one or more additional web crawls are determined based, at least in part, on the trained AI model.

In an embodiment, the second initial website is the same as the initial website.

In an embodiment, the second initial website is different than the initial website.

In a further aspect of the present invention, a non-transitory program storage device (NPSD) is presented, comprising computer readable instructions executable by one or more processors to: obtain an initial website for web crawling operations, obtain one or more valuable document criteria for the web crawling operations, perform one or more web crawls from the initial website, wherein each web crawl comprises a crawl path, identify one or more valuable documents discovered from the one or more web crawls based, at least in part, on the one or more valuable document criteria, train an artificial intelligence (AI) model to learn the crawl paths that led to the identification of the one or more valuable documents, and store the trained AI model in a memory.

In an embodiment, the one or more valuable document criteria comprise one or more of: a document category; a document type; a subject matter; or a document language.

In an embodiment, the one or more web crawls from the initial website comprise undirected web crawls.

In an embodiment, the NPSD further comprises computer readable instructions executable by one or more processors to: provide the trained AI model to an entity.

In an embodiment, the trained AI model is configured for use in an intelligent web crawling operation, wherein the intelligent web crawling operation is based, at least in part, on the one or more valuable document criteria.

In a further aspect of the present invention, a system is presented, comprising: an electronic storage component, a user interface device, and one or more processors operatively coupled to the electronic storage component, wherein the one or more processors are configured to execute instructions causing the one or more processors to: obtain an initial website for web crawling operations, obtain one or more valuable document criteria for the web crawling operations, perform one or more web crawls from the initial website, wherein each web crawl comprises a crawl path, identify one or more valuable documents discovered from the one or more web crawls based, at least in part, on the one or more valuable document criteria, train an artificial intelligence (AI) model to learn the crawl paths that led to the identification of the one or more valuable documents, and store the trained AI model in the electronic storage component.

In an embodiment, the one or more processors are further configured to execute instructions causing the one or more processors to: perform one or more additional web crawls from a second initial website, wherein each additional web crawl comprises a crawl path, identify one or more additional valuable documents discovered from the one or more additional web crawls based, at least in part, on the one or more valuable document criteria, re-train the AI model to further learn the crawl paths that led to the identification of the one or more additional valuable documents, and store the re-trained AI model in the electronic storage component.

In an embodiment, the crawl paths for the one or more additional web crawls are determined based, at least in part, on the trained AI model.

In an embodiment, the second initial website is the same as the initial website.

In an embodiment, the second initial website is different than the initial website.

It shall be understood that the computer-implemented method of claim 1, the non-transitory program storage device of claim 11 and the system of claim 15 have similar and/or identical preferred embodiments, particularly as defined in the dependent claims.

The particular organization of web crawling, AI model training and using the trained AI model described herein can allow valuable documents to be discovered across large numbers of websites with fewer web page requests, less network traffic and reduced computational effort. In some embodiments, by first performing undirected web crawls and recording the crawl paths that led to valuable documents, training data can be obtained that enables the AI model to learn structural patterns associated with successful crawl paths. Applying the trained AI model to assign priority scores to newly discovered links can allow subsequent crawling operations to direct requests preferentially toward links more likely to lead to valuable documents, thereby potentially reducing the total number of request-response cycles and the associated consumption of network bandwidth, CPU time and memory. Assigning point budgets to individual crawl paths can further help to limit the number of web page requests expended on low-yield paths, thereby allowing to conserve network and computational resources. Re-training the AI model with crawl path data from additional websites can enable the model to improve its prioritization progressively, potentially resulting in fewer requests per valuable document discovered with each iteration and thus more efficient use of computational resources.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 illustrates a block diagram of an example environment.
FIG. 2 illustrates an example method for performing an intelligent web crawling operation, according to one or more embodiments.
FIG. 3 illustrates a block diagram of an example computing device.

### DETAILED DESCRIPTION OF ILLUSTRATIVE EMBODIMENTS

Today, most entities involved in website spidering/scraping operations either perform undirected web crawling at a massive scale, e.g., to build a search engine, or perform small-scale web scraping to extract very specific known data points from a small set of sites. Web crawling for "Big Data" analysis is typically done at a very large scale, e.g., on the order of tens of thousands of websites, and is looking for definable types of data points, which can take many forms. However, the techniques presented herein provide a more efficient and intelligent process for performing "semi-targeted" crawling operations, even at very large scales. As used herein, "semi-targeted" refers to the fact that an intelligent web crawling operation may at least know the "types" of documents that it is searching for (e.g., academic researcher profiles), but it does not necessarily know the exact document formats or the exact URL patterns for such documents on any given website that is being crawled.

In particular, techniques presented herein may be used to improve the efficiency and effectiveness of data collection systems. By getting a larger proportion of "valuable" documents out of crawled sources, clients utilizing the disclosed techniques will receive back a larger amount of valuable data from their crawling operations. According to some embodiments, the intelligent web crawling operations disclosed herein may be implemented as an automated process, e.g., leveraging the document collection and classification work that has previously been performed, thereby allowing the intelligent web crawling system to continuously improve over time-with minimal human intervention. Moreover, as new source websites and document classifications are added, the intelligent web crawling system will adapt to those new sources and classifications, thereby allowing the system to extract additional value from each crawled website.

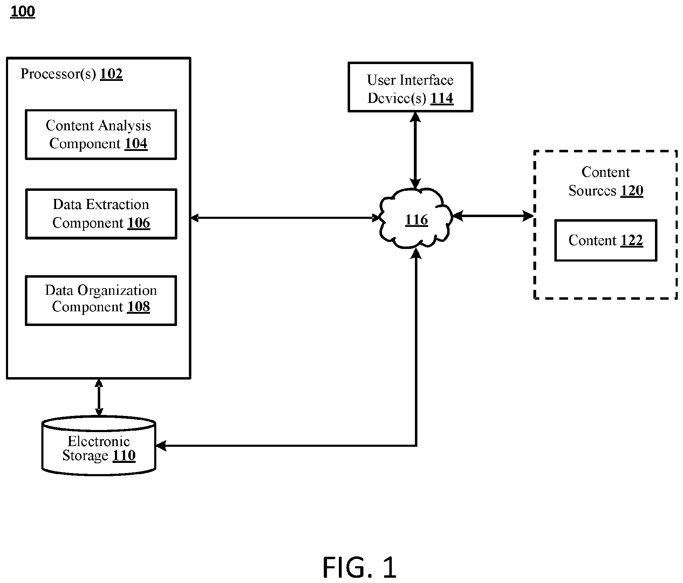

FIG. 1 illustrates an example hardware and network configuration, in which the intelligent web crawling systems and methods described herein may be implemented. Such a hardware and network system 100 includes a processor 102, a database 110, at least one user interface device 114, and at least one content source 120. The processor 102, database 110, at least one user interface device 114, and at least one content source 120 are in communication via a network 116. The processor 102 may be in communication with the database 110. The processor 102 may cause data to be stored in the database 110 and/or receive data stored in the database 110. The database 110 may store a variety of different data.

The processor 102, electronic storage 110, user interface device(s) 114, and content source(s) 120 may each comprise one or more computing devices and/or network devices. The network 116 may comprise one or more public networks (e.g., the Internet) and/or one or more private networks. A private network may include a wireless local area network (WLAN), a local area network (LAN), a wide area network (WAN), a cellular network, or an intranet. The network 116 may comprise wired network(s) and/or wireless network(s).

The processor 102 may be configured to receive, capture, and categorize data. The processor 102 may include a variety of different components. For example, the processor may include a content analysis component 104, a data extraction component 106, and/or a data organization component 108. One or more of these components 104, 106, 108 may be used to capture and categorize data from a large quantity of data sources, e.g., websites found on the Internet or other sources.

In embodiments, the processor 102 includes the content analysis component 104. The content analysis component 104 may be configured to receive content 122 from the content source(s) 122. The content 122 may include various types of digital content. For example, the content 122 may include documents, files, articles, product listings, resumes, CVs, agenda, webpages, websites, etc. The content source(s) 122 may include any source of digital content, including but not limited to website providers, digital content providers, resume repositories, etc. There may be tens, hundreds, thousands, or millions of content sources 120. To receive the content 122, the content analysis component 104 may retrieve the content 122. Alternatively, the content 122 may be sent to the content analysis component 104.

The content analysis component 104 may be configured to determine whether received content 122 includes one or more "valuable" documents. A valuable document, as used herein, refers to any document that meets one or more value criteria (e.g., based on an application of one or more rules or AI models that have been trained to classify certain types of documents that are of interest to the entity that has initiated the intelligent web crawling operation). If the content analysis component 104 determines that one or more valuable documents have been identified, the content analysis component 104 may be configured to further store the crawled document that has been identified as valuable. In embodiments, this may also be accompanied with metadata that allows the tracing of the path that a spider/crawler took to get to that particular valuable webpage or document.

In certain embodiments, the content analysis component 104 may also determine a language associated with the content. For example, the content analysis component 104 may determine whether the content contains English, Spanish, French, Russian, Mandarin, etc. The content analysis component 104 may determine whether the presence of a particular language is associated with a particular classification and/or a higher or lower level of value to the web crawling task at hand.

If the content analysis component 104 determines that a given document has a "value" level that exceeds one or more pre-established document value/relevance threshold levels, a process may take the identified valuable document(s) and reconstruct the crawled path that led from a starting URL to the webpages of the identified valuable documents. The reconstructed paths may then be used as input to further train an AI model for intelligent web crawling.

Then, for subsequent crawling operation (i.e., either of originally-identified websites or newly-located ones), the trained AI model may again be used to assign relative priorities (or scores) to all of the links found on a given webpage, e.g., based on how likely they are to lead to a valuable document, i.e., according to the current version of the AI model. The documents crawled may then be classified themselves, and those results may then be used for further training of the AI model. In some embodiments, the AI model can comprise one or more of the following: a neural network, for example a feedforward neural network, a recurrent neural network, a long short term memory network, or a transformer based model, a reinforcement learning agent, for example based on deep Q networks, policy gradient methods such as Proximal Policy Optimization, or actor critic methods, a random forest, or a gradient boosting model. The AI model can also comprise a combination of the foregoing model types. The selection of a particular model type can depend on the scale of the web crawling operation, the amount of available training data, the computational resources available for model training and inference, and the desired balance between model accuracy and inference speed during crawling.

In embodiments, the processor 102 includes the data extraction component 106. If the content analysis component 104 determines that one or more pieces of received content 122 includes documents deemed to be "valuable" to a given web crawling operation, the content analysis component 104 may be configured to send (i.e., forward) the information to the data extraction component 106. The data extraction component 106 may be configured to receive and parse the information, such that appropriate metadata signals gleaned from the underlying received content 122 (e.g., crawl paths to reach a document, document types, URLs, modified dates, etc.) are each associated with the appropriate crawled documents.

The data extraction component 106 may be configured to extract any or all potentially-relevant and/or path-identifying information from received content 122. For example, if the received content 122 reflects that a given document relates to a particular type of interest that an entity may later request a data collection operation based upon, that extracted information may be used by content analysis component 104 to further train the AI model and increase get the most value out of every crawled website.

According to embodiments disclosed herein the operation may be set up as an automated process, i.e., leveraging the document collection and classification work that has already been done, so the system will be able to continuously improve-with minimal human intervention. As new source websites and document classifications are added over time, the system will adapt to those new additions and extract even more value from crawled websites in future operations.

In some embodiments, the processor 102 may also include a data organization component 108. The data organization component 108 may be configured to organize the extracted data according to document type, crawl path, interest/topics, or any other characteristic that may valuable a future web crawling operation. For example, the data organization component 108 may arrange the extracted data according to individual "classifications" of documents, thereby providing an entity that is later requesting a web crawling operations with the ability to gain a quick and comprehensive overview of the types of documents that their intelligent web crawling operation should prioritize searching for.

In embodiments, the data organization component 108 may be configured to send the organized data or persist the organized data to electronic storage, e.g., database(s) 110. The database(s) 110 may receive the organized data and maintain it in profiles according to document classifications and/or individual websites. For example, the database(s) 110 may maintain an AI model that has been trained to crawl for "resume" documents, an AI model that has been trained to crawl for "product listing" documents, and another AI model that has been trained to crawl for "financial" documents, etc. According to other embodiments, requesting entities may also be able to specify particular document classifications (e.g., academic profiles) that they expect to see on a given website, and the weighting for the AI models could be modified accordingly. For instance, if a crawling operation is preconfigured to expect academic profiles, the intelligent web crawling operation may still utilize all available AI models on a discovered set of links, but the results of the academic profiles AI model could have, e.g., five times the effect of the other AI models on the overall priority score assigned to respective links. According to some such embodiments, controls may be made available that provide requesting entities with even more granular control over document classification priorities and/or allow the requesting entity to specify a particular AI model to be applied exclusively to the crawling operation. The individual classifications and/or associated AI models that are available for use in an intelligent web crawling operation may then be viewed, such as by a requesting entity, via one or more user interface device(s) 114. The user interface device(s) 114 may include at least one of a tablet, phone, smart phone, computer, laptop, television, etc.

### Exemplary Intelligent Web Crawling Methods

In some implementations, the AI models referred to herein may be pretrained on particular types of websites and valuable data, e.g., university sites, research papers, or the like. A service could then be offered to customers that would be configured to crawl and collect all the research papers from a given university site in an intelligent and efficient manner.

In other implementations, a service could be offered directly to customers, whereby custom classifiers and/or AI models could be developed in conjunction with the client to allow the client to collect any type of document they were interested in from any given website(s)-and to be able to do so at scale. In still other implementations, a web crawling system according to the methods disclosed herein could be used internally (i.e., by the company that developed the various proprietary AI models trained to crawl the web for particular classifications of documents) to collect a large store of documents specific to some area of interest. The collected documents could then either be packaged and sold to clients interested in those particular classifications or used for further analysis and refinement into other products.

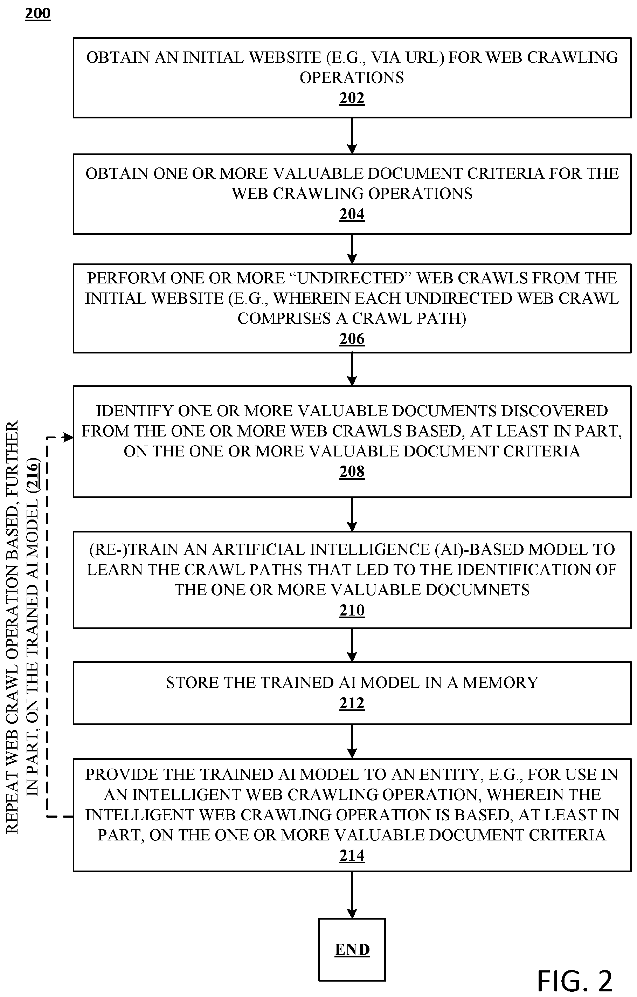

Figure 2 illustrates an exemplary method 200 for performing an intelligent web crawling operation, according to one or more embodiments. The method 200 may be performed, for example, by the processor 102 of FIG. 1. The method 200 may be performed to improve the efficiency and effectiveness of a web crawling-based data collection operation. As described above, at 202, a processor (e.g., the content analysis component 104) may be configured to obtain a "seed" or initial website (e.g., via a starting URL) from which to begin an intelligent web crawling operation.

In some implementations, user behavior may be used to refine the initial website crawling starting URLs. Users can also collect individual webpages from a website manually. When they do, if the particular website is already in the crawling system, the collected page(s) may be added as a potential starting URL for the next crawling operation. The logic behind this is that the crawling operation will then start in the "neighborhood" of a hand-selected valuable webpage by a user, and valuable pages tend to be clustered together on a site. While this approach is helpful, a spider can still easily go down a wasteful path from an otherwise valuable starting URL. This approach also relies on the aforementioned human intervention to identify good candidate starting URLs, which does not scale well. Moreover, providing custom configurations or writing custom code for every website an entity may want to crawl is not practical if there are hundreds (or even thousands) of target websites to crawl. Thus, additional intelligence and automation techniques are needed to improve the efficiency of web crawling operations.

At 204, the method 200 may obtain one or more valuable document criteria for the web crawling operations. Valuable document criteria may, e.g., comprise one or more of: a document category; a document type; a subject matter; or a document language. For example (as will be explained in greater detail at 208), the valuable document criteria may be used once an initial undirected web crawling operation has been performed to help the method 200 understand which web crawl paths (if any) led to the discovery and identification of documents that meet the one or more valuable document criteria.

At 206, the method 200 may perform one or more "undirected" web crawls from the initial website (e.g., wherein each undirected web crawl comprises a crawl path). "Undirected," as used herein, simply means a web crawling operation that is not guided by any particular intelligence or priorities, e.g., in terms of which links are visited and/or in which order. Instead, an undirected web crawl may simply aim to exhaustively search all links and paths discovered from initial or seed website, e.g., until an end condition is met, such as: all links crawled, page limit met, bandwidth limit met, site stops responding, etc.

At 208, the method 200 may identify one or more valuable documents discovered from the one or more web crawls based, at least in part, on the one or more valuable document criteria. For example, if the web crawl operations at 206 resulted in crawling 100 distinct paths, then perhaps only 5 such web crawl paths resulted in the discovery of a document(s) that met the one or more valuable document criteria (e.g., identifying a research paper, resume, product listing website, etc.)

Next, at 210 the method 200 may train (or re-train, in the event that a trained AI model has already previously been created for the given one or more valuable document criteria) an artificial intelligence (AI)-based model to learn the crawl paths that lead to the identification of the one or more valuable documents, e.g., via one or more reinforcement learning techniques. As may now be appreciated, over iteration(s) of training a particular intelligent web crawling AI model to prefer the crawl paths that led to the discovery of valuable documents, the number of the web page requests needed to get valuable data from any website(s) that contains similar data can be minimized in the future-as the AI model will know which pathways or links on a given website to prioritize in the web crawling operation. For example, if the "undirected" web crawl operations at 206 resulted in crawling 100 distinct paths, then subsequent intelligent web crawl operation, i.e., leveraging a trained AI model, may require the crawling of only 50 distinct paths to discover the same set of valuable documents, thereby resulting in a 50% decrease in resources that need to be dedicated to the web crawling operations to locate the valuable documents that a client may be interested in. As may be appreciated, the reduction in the number of distinct crawl paths required to discover the same set of valuable documents corresponds directly to a reduction in the number of request-response cycles performed over the network. Each avoided request conserves network bandwidth both on the crawling system's network and on the network serving the crawled website, reduces CPU time spent on request construction, response parsing, and content analysis, and reduces memory allocated for storing intermediate crawl results. In some embodiments, the trained AI model can thus enable the crawling system to achieve the same document discovery results while utilizing a fraction of the network bandwidth, computational resources, and time that an undirected crawling operation would require. This technical improvement is particularly significant at large scales, where the crawling system may be operating under technical constraints such as rate limits imposed by target servers, bandwidth caps, or limited CPU and memory availability.

At 212, the trained AI model may be stored in a non-transitory memory. In this way, at 214, the method 200 may be able to provide the trained AI model to an entity (e.g., a client or customer), e.g., for use in an intelligent web crawling operation, wherein the intelligent web crawling operation is based, at least in part, on the one or more valuable document criteria. For example, returning to the "research paper" example given above, the entity that created the trained AI model could subsequently sell a "research paper-aware" web crawling service to clients who were interested in efficiently and effectively crawling a large number of target websites at scale to discover any research papers linked to (e.g., via a web crawl path) any of the target websites.

Finally, at 216, the method 200 may optionally iteratively train an AI model for further performance enhancements. For example, following dashed line 216, the method 200 could return to 208 to repeat web crawl operation based, further in part, on the (now at least once) trained AI model. In such subsequent iterations, the trained AI model may be used to assign relative priorities (or scores) to all links found on a webpage, i.e., based on how likely they are to lead to discovery of a valuable document. The documents crawled by such subsequent iteration of the method 200 may be classified, and then those results may be used for yet further training of the AI model, if so desired.

According to some embodiments, the web crawling operation of method 200 may extract a set of links from a webpage and initially assign them all the same default priority score, e.g., a value of '1.' The set of links may then be processed according to a ranking service, which may run each applicable trained AI model on the set of links (e.g., applying all AI models, applying only AI models explicitly selected by the requesting entity, etc.). Next, each AI model will assign a priority score to each link (e.g., in the range of 0.0 to 1.0), which score value corresponds to the likelihood that a particular link will lead to the desired document class that the respective AI model was trained to seek. Based on implementation-specific configurations for AI model weights and/or confidence thresholds, a given AI model may optionally add additional value to the priority scores assigned to some or all of the links by the given AI model.

In some implementations, a budget of "points" may be assigned to each AI model, which points can be added to a given link's final priority score. For example, if there are 3 equally-weighted AI models in a given implementation (e.g., each with a budget of 10 points), the calculation: floor(weight * confidence) may be used to assign anywhere from 0-10 points to each link. Then, the sum of all the models' points may be added to the original/default value, here, a value of '1.' Thus, in this example, the possible priority scale for all links would be: 1-31. If one of the AI models is weighted 3 times as much as the others, the possible priority scale would then become 1-51, wherein 30 of those points would be controlled by the 3x-weighted AI model. Thus, the heavily-weighted AI model could effectively override the other two if it has a high confidence for a link. As a worked example, if AI model #3 has weight value of '10' and a confidence threshold '0.6,' it would add 6 "points" to the priority score for a given link. Finally, the ranking service would return the new priorities for each link, which would be the sum total of priorities assigned by each model.

As may now be appreciated, as this iterative process continues-and as more and more websites are added and more web crawls are performed-the AI model(s) will continuously learn and improve its efficiency in the ability to find paths to valuable documents across a wide variety of websites. Then, when a new website is crawled for the first time, the already-trained AI model will be able to guide the crawling operation to valuable documents more quickly than a naïve (e.g., undirected) web crawling approach would be able to. In some embodiments, the technical efficiency gains achieved by the trained AI model can compound over successive iterations of the training process. Because the architecture described herein can allow using the AI model as a trainable and re-trainable component rather than a static, hardwired rule set, the model can be updated with crawl path data from each new web crawling operation and can thereby develop increasingly accurate representations of structural patterns associated with valuable documents across diverse website architectures. This can result in progressively fewer requests being needed per valuable document discovered, further reducing the consumption of network bandwidth, computational resources, and time. Unlike a system relying on fixed crawling rules, the described architecture can thus exhibit a continuous improvement in the efficiency of its network and computing operations over time.

In some embodiments described herein, the AI model can comprise one or more of the following: a feedforward, recurrent or transformer based neural network, a reinforcement learning agent based on deep Q networks, Proximal Policy Optimization or actor critic methods, a random forest, or a gradient boosting model. The input features used by the AI model for assigning priority scores to links can include components of the URL such as path segments, query parameters or file extension, the anchor text of the link, for example represented as a term frequency inverse document frequency vector or a learned embedding, the position and HTML attributes of the link element within the Document Object Model tree of the page, the depth of the linked page relative to the starting URL, and features derived from the page content such as detected language or document type. The output of the AI model for a given link can be a numerical priority score representing the estimated likelihood that following the link will lead to the discovery of a document meeting the valuable document criteria. In some embodiments, training data can be constructed by extracting a feature vector for each link encountered during undirected crawling and labeling each link according to whether the crawl path through that link led to a valuable document. The resulting labeled dataset can be used to train the AI model using learning techniques such as cross entropy loss minimization with stochastic gradient descent for neural networks or iterative tree construction for gradient boosting models. In some embodiments, the training of the AI model within each crawling iteration can be based on a reward signal derived from the crawling results. For instance, each crawling operation can be formulated as a sequential decision making problem in which a positive reward is assigned when the crawler discovers a valuable document and a zero or small negative reward is assigned otherwise, thereby adapting the AI model to discover valuable documents in as few web page requests as possible. As an illustrative example, an undirected crawl of 10,000 pages across 50 university websites can discover 500 researcher profile pages. A gradient boosting classifier trained on link features from this crawl may, when applied to new university websites, enable the crawler to discover the same profiles while requesting only 3,000 pages instead of 10,000, corresponding to a 70 percent reduction in web page requests.

Once a desired level of AI model training has been completed and/or once the intelligent web crawling services requested by a customer have been completed, the method 200 may end.

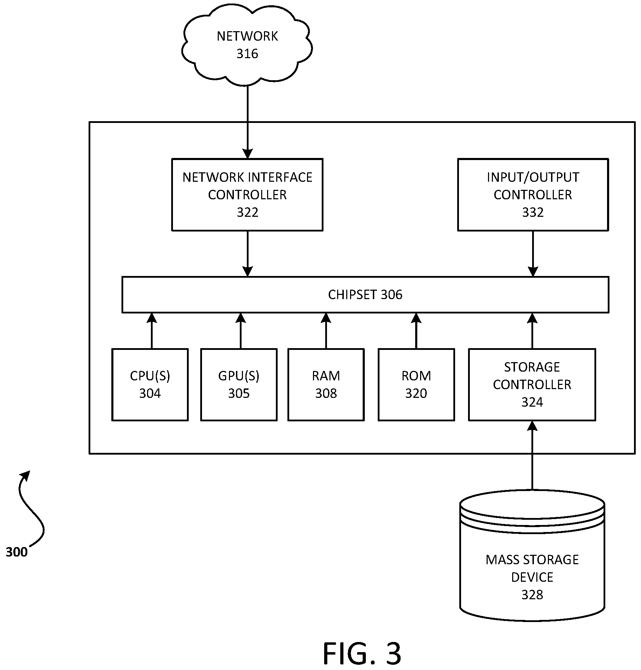

FIG. 3 depicts a computing device that may be used in various aspects. With regard to the example environment of FIG. 1, one or more of the processor 102, electronic storage 110, user interface device(s) 114, or content source(s) 120 may be implemented in an instance of a computing device 300 of FIG. 3. The computer architecture shown in FIG. 3 shows a conventional server computer, workstation, desktop computer, laptop, tablet, network appliance, PDA, e-reader, digital cellular phone, or other computing node, and may be utilized to execute any aspects of the computers described herein, such as to implement the methods described in FIG. 2.

The computing device 300 may include a baseboard, or "motherboard," which is a printed circuit board to which a multitude of components or devices may be connected by way of a system bus or other electrical communication paths. One or more central processing units (CPUs) 304 may operate in conjunction with a chipset 306. The CPU(s) 304 may be standard programmable processors that perform arithmetic and logical operations necessary for the operation of the computing device 300.

The CPU(s) 304 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 304 may be augmented with or replaced by other processing units, such as GPU(s) 305. The GPU(s) 305 may comprise processing units specialized for but not necessarily limited to highly parallel computations, such as graphics and other visualization-related processing.

A user interface may be provided between the CPU(s) 304 and the remainder of the components and devices on the baseboard. The interface may be used to access a random access memory (RAM) 308 used as the main memory in the computing device 300. The interface may be used to access a computer-readable storage medium, such as a read-only memory (ROM) 320 or non-volatile RAM (NVRAM) (not shown), for storing basic routines that may help to start up the computing device 300 and to transfer information between the various components and devices. ROM 320 or NVRAM may also store other software components necessary for the operation of the computing device 300 in accordance with the aspects described herein. The user interface may be provided by a one or more electrical components such as the chipset 306.

The computing device 300 may operate in a networked environment using logical connections to remote computing nodes and computer systems through local area network (LAN) 316. The chipset 306 may include functionality for providing network connectivity through a network interface controller (NIC) 322, such as a gigabit Ethernet adapter. A NIC 322 may be capable of connecting the computing device 300 to other computing nodes over a network 316. It should be appreciated that multiple NICs 322 may be present in the computing device 300, connecting the computing device to other types of networks and remote computer systems.

The computing device 300 may be connected to a storage device 328 that provides non-volatile storage for the computer. The storage device 328 may store system programs, application programs, other program modules, and data, which have been described in greater detail herein. The storage device 328 may be connected to the computing device 300 through a storage controller 324 connected to the chipset 306. The storage device 328 may consist of one or more physical storage units. A storage controller 324 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 300 may store data on a storage device 328 by transforming the physical state of the physical storage units to reflect the information being stored. The specific transformation of a physical state may depend on various factors and on different implementations of this description. Examples of such factors may include, but are not limited to, the technology used to implement the physical storage units and whether the storage device 328 is characterized as primary or secondary storage and the like.

For example, the computing device 300 may store information to the storage device 328 by issuing instructions through a storage controller 324 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope and spirit of the present description, with the foregoing examples provided only to facilitate this description. The computing device 300 may read information from the storage device 328 by detecting the physical states or characteristics of one or more particular locations within the physical storage units.

In addition to or alternatively to the storage device 328 described herein, the computing device 300 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 300.

By way of example and not limitation, computer-readable storage media may include volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A storage device, such as the storage device 328 depicted in FIG. 3, may store an operating system utilized to control the operation of the computing device 300. The operating system may comprise a version of the LINUX operating system. The operating system may comprise a version of the WINDOWS SERVER operating system from the MICROSOFT Corporation. According to additional aspects, the operating system may comprise a version of the UNIX operating system. Various mobile phone operating systems, such as IOS and ANDROID, may also be utilized. It should be appreciated that other operating systems may also be utilized. The storage device 328 may store other system or application programs and data utilized by the computing device 300.

The storage device 328 or other computer-readable storage media may also be encoded with computer-executable instructions, which, when loaded into the computing device 300, transforms the computing device from a general-purpose computing system into a special-purpose computer capable of implementing the aspects described herein. These computer-executable instructions transform the computing device 300 by specifying how the CPU(s) 304 transition between states, as described herein. The computing device 300 may have access to computer-readable storage media storing computer-executable instructions, which, when executed by the computing device 300, may perform methods described in relation to FIG. 2.

A computing device, such as the computing device 300 depicted in FIG. 3, may also include an input/output controller 332 for receiving and processing input from a number of input devices, such as a keyboard, a mouse, a touchpad, a touch screen, an electronic stylus, or other type of input device. Similarly, an input/output controller 332 may provide output to a display, such as a computer monitor, a flat-panel display, a digital projector, a printer, a plotter, or other type of output device. It will be appreciated that the computing device 300 may not include all of the components shown in FIG. 3, may include other components that are not explicitly shown in FIG. 3, or may utilize an architecture completely different than that shown in FIG. 3.

As described herein, a computing device may be a physical computing device, such as the computing device 300 of FIG. 3. A computing node may also include a virtual machine host process and one or more virtual machine instances. Computer-executable instructions may be executed by the physical hardware of a computing device indirectly through interpretation and/or execution of instructions stored and executed in the context of a virtual machine.

### Examples

The following Examples represent additional embodiments of the subject matter disclosed herein.

According to Example 1, a computer-implemented method is disclosed, comprising: obtaining an initial website for web crawling operations; obtaining one or more valuable document criteria for the web crawling operations; performing one or more web crawls from the initial website, wherein each web crawl comprises a crawl path; identifying one or more valuable documents discovered from the one or more web crawls based, at least in part, on the one or more valuable document criteria; training an artificial intelligence (AI) model to learn the crawl paths that led to the identification of the one or more valuable documents; and storing the trained AI model in a memory.

Example 2 comprises the subject matter of Example 1, wherein the initial website is specified via a starting Uniform Resource Locator (URL).

Example 3 comprises the subject matter of Example 1, wherein the one or more valuable document criteria comprise one or more of: a document category; a document type; a subject matter; or a document language.

Example 4 comprises the subject matter of Example 1, wherein the one or more web crawls from the initial website comprise undirected web crawls.

Example 5 comprises the subject matter of Example 1, and further comprising: providing the trained AI-based model to an entity.

Example 6 comprises the subject matter of Example 5, wherein the trained AI-based model is configured for use in an intelligent web crawling operation, and wherein the intelligent web crawling operation is based, at least in part, on the one or more valuable document criteria.

Example 7 comprises the subject matter of Example 1, and further comprising: performing one or more additional web crawls from a second initial website, wherein each additional web crawl comprises a crawl path; identifying one or more additional valuable documents discovered from the one or more additional web crawls based, at least in part, on the one or more valuable document criteria; re-training the AI model to further learn the crawl paths that led to the identification of the one or more additional valuable documents; and storing the re-trained AI model in the memory.

Example 8 comprises the subject matter of Example 7, wherein the crawl paths for the one or more additional web crawls are determined based, at least in part, on the trained AI model.

Example 9 comprises the subject matter of Example 7, wherein the second initial website is the same as the initial website.

Example 10 comprises the subject matter of Example 7, wherein the second initial website is different than the initial website.

Example 11 comprises a non-transitory program storage device (NPSD), comprising computer readable instructions executable by one or more processors to perform the subject matter of any of Examples 1-10.

Example 12 comprises a system, further comprising: an electronic storage component; a user interface device; and one or more processors operatively coupled to the electronic storage component, wherein the one or more processors are configured to execute instructions causing the one or more processors to perform the subject matter of any of Examples 1-10.

One skilled in the art will appreciate that the systems, non-transitory program storage devices (NPSDs), and methods disclosed herein may be implemented via a computing device that may comprise, but are not limited to, one or more processors, a system memory, and a system bus that couples various system components including the processor to the system memory. In the case of multiple processors, the system may utilize parallel computing.

For purposes of illustration, application programs and other executable program components such as the operating system are illustrated herein as discrete blocks, although it is recognized that such programs and components reside at various times in different storage components of the computing device, and are executed by the data processor(s) of the computer. An implementation of service software may be stored on or transmitted across some form of computer- readable media. Any of the disclosed methods may be performed by computer - readable instructions embodied on computer -readable media. Computer -readable media may be any available media that may be accessed by a computer. By way of example and not meant to be limiting, computer-readable media may comprise "computer storage media" and "communications media." "Computer storage media" comprise volatile and non-volatile, removable and non-removable media implemented in any methods or technology for storage of information such as computer- readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer. Application programs and the like and/or storage media may be implemented, at least in part, at a remote system.

As used in the specification and the appended claims, the singular forms "a," "an" and "the" include plural referents unless the context clearly dictates otherwise. Ranges may be expressed herein as from "about" one particular value, and/or to "about" another particular value. Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect.

It will be apparent to those skilled in the art that various modifications and variations may be made without departing from the scope or spirit. Other embodiments will be apparent to those skilled in the art from consideration of the specification and practice disclosed herein. It is intended that the specification and examples be considered as exemplary only, with a true scope and spirit being indicated by the following claims.

## Claims

1. A computer-implemented method, comprising:
obtaining an initial website for web crawling operations;
obtaining one or more valuable document criteria for the web crawling operations;
performing one or more web crawls from the initial website, wherein each web crawl comprises a crawl path;
identifying one or more valuable documents discovered from the one or more web crawls based, at least in part, on the one or more valuable document criteria;
training an artificial intelligence (AI) model to learn the crawl paths that led to the identification of the one or more valuable documents; and
storing the trained AI model in a memory.

2. The method of claim 1, wherein the initial website is specified via a starting Uniform Resource Locator (URL).

3. The method of claim 1 or claim 2, wherein the one or more valuable document criteria comprise one or more of: a document category; a document type; a subject matter; or a document language.

4. The method of any of the preceding claims, wherein the one or more web crawls from the initial website comprise undirected web crawls.

5. The method of any of the preceding claims, further comprising: providing the trained AI model to an entity.

6. The method of claim 5, wherein the trained AI model is configured for use in an intelligent web crawling operation, and wherein the intelligent web crawling operation is based, at least in part, on the one or more valuable document criteria.

7. The method of any of the preceding claims, further comprising:
performing one or more additional web crawls from a second initial website, wherein each additional web crawl comprises a crawl path;
identifying one or more additional valuable documents discovered from the one or more additional web crawls based, at least in part, on the one or more valuable document criteria;
re-training the AI model to further learn the crawl paths that led to the identification of the one or more additional valuable documents; and
storing the re-trained AI model in the memory.

8. The method of claim 7, wherein the crawl paths for the one or more additional web crawls are determined based, at least in part, on the trained AI model.

9. The method of claim 7 or claim 8, wherein the second initial website is the same as the initial website.

10. The method of claim 7 or claim 8, wherein the second initial website is different than the initial website.

11. A non-transitory program storage device (NPSD), comprising computer readable instructions executable by one or more processors to:
obtain an initial website for web crawling operations;
obtain one or more valuable document criteria for the web crawling operations;
perform one or more web crawls from the initial website, wherein each web crawl comprises a crawl path;
identify one or more valuable documents discovered from the one or more web crawls based, at least in part, on the one or more valuable document criteria;
train an artificial intelligence (AI) model to learn the crawl paths that led to the identification of the one or more valuable documents; and
store the trained AI model in a memory.

12. The NPSD of claim 11, wherein the one or more valuable document criteria comprise one or more of: a document category; a document type; a subject matter; or a document language.

13. The NPSD of claim 11 or claim 12, wherein the one or more web crawls from the initial website comprise undirected web crawls.

14. The NPSD of any of claims 11 to 13, further comprising computer readable instructions executable by one or more processors to: provide the trained AI model to an entity.

15. A system, comprising:
an electronic storage component;
a user interface device; and
one or more processors operatively coupled to the electronic storage component, wherein the one or more processors are configured to execute instructions causing the one or more processors to:
obtain an initial website for web crawling operations;
obtain one or more valuable document criteria for the web crawling operations;
perform one or more web crawls from the initial website, wherein each web crawl comprises a crawl path;
identify one or more valuable documents discovered from the one or more web crawls based, at least in part, on the one or more valuable document criteria;
train an artificial intelligence (AI) model to learn the crawl paths that led to the identification of the one or more valuable documents; and
store the trained AI model in the electronic storage component.
